# EUROPÄISCHE PATENTSCHRIFT

(11) **EP 4 312 494 B1**
(45) Veröffentlichungstag und Bekanntmachung des Hinweises auf die Patenterteilung: **08.07.2026**
(21) Anmeldenummer: 22717571.8
(22) Anmeldetag: 22.03.2022
(51) Int. Cl.: A01C 15/00, A01C 19/02, A01C 9/00

(54) **LANDWIRTSCHAFTLICHE STREUVORRICHTUNG**
AGRICULTURAL SPREADING DEVICE
DISPOSITIF D'ÉPANDAGE AGRICOLE

(30) Priorität: 22.03.2021 DE 202021101469 U
(43) Veröffentlichungstag der Anmeldung: 07.02.2024
(73) Patentinhaber: Grimme Landmaschinenfabrik SE & Co. KG, 49104 Damme (DE)
(72) Erfinder: GOTTKE-HASKAMP, Frank, 49439 Steinfeld (DE); HOHNHORST, Johannes, 49401 Damme (DE)
(74) Vertreter: Wischmeyer, André
(86) Internationale Anmeldenummer: PCT/EP2022/057529
(87) Internationale Veröffentlichungsnummer: WO 2022/200372

(56) Entgegenhaltungen:
- EP-A1- 0 678 233
- DE-A1- 102019 106 898
- DE-A1- 2 438 107
- US-A1- 2003 217 679
- US-B2- 8 166 895

## Beschreibung

Die vorliegende Erfindung betrifft eine landwirtschaftliche Streuvorrichtung für Dünger oder anderes auf einen zu bearbeitenden Boden zu überführendes Gut, umfassend einen Vorratsbehälter für das Gut sowie eine Abgabeeinheit, die eine zumindest teilweise durch den Vorratsbehälter verlaufende Rührwelle und eine Dosiervorrichtung mit wenigstens einem insbesondere in einem Dosiergehäuse befindlichen und vorzugsweise als Dosierwelle ausgebildeten Dosierelement umfasst, wobei mittels der Dosiervorrichtung das Gut in Richtung eines Abgabebereiches der Abgabeeinheit förderbar ist, wobei eine eine Antriebseinheit aufweisende Antriebsvorrichtung der Abgabeeinheit zum Antrieb der Rührwelle und zum Antrieb der Dosiervorrichtung, vorzugsweise des Dosierelements, über die Rührwelle ausgebildet ist.

Eine landwirtschaftliche Streuvorrichtung ist in der EP 0 459 175 A1 offenbart. Eine quer über die Maschinenbreite verlaufende Rührwelle treibt eine einzige Dosierwelle an, die ebenfalls quer über die Maschinenbreite verläuft.

Aus der EP 0 678 233 A1 ist ein Gegenstand nach dem Oberbegriff des Anspruchs 1 bekannt. Eine landwirtschaftliche Streuvorrichtung für Dünger oder anderes auf einen zu bearbeitenden Boden zu überführendes Gut weist zwei Dosiervorrichtungen sowie zwei zugehörige Rührwellen auf.

Die US 5 878 679 A offenbart eine Dosiervorrichtung mit einer Produktabschaltung, die an einem Saatgutdosiersystem zur Absperrung des Produktflusses von einem Produkttank zu einem nachfolgenden Abschnitt des Dosiersystems vorgesehen ist.

Die DE 10 2019 106 898 A1 offenbart eine Verteileinrichtung für granulares Material, bei der die Dosierorgane und/oder die Rührorgane der zumindest zwei Vorratsbehälter von einer einzigen Dosierwelle und/oder Rührwelle antreibbar sind.

DE 24 38 107 A1 betrifft wiederum eine Sämaschine, bei der die Rührwelle 7 sowie die Dosierwelle über ein gemeinsames Regelgetriebe angetrieben werden.

In der US 8 166 895 B2 ist ebenfalls eine Dosiervorrichtung zum Dosieren eines granularen Produktes offenbart, wobei eine einheitliche Dosierwalze mit einer Vielzahl von Dosierwalzenabschnitten versehen ist, wobei jeder Dosierwalzenabschnitt ein bestimmtes Volumen des granularen Produktes pro Umdrehung weiterleiten kann.

Es ist Aufgabe der vorliegenden Erfindung, eine gattungsgemäße Streuvorrichtung wartungsfreundlicher zu gestalten.

Die Aufgabe wird gelöst durch einen Gegenstand gemäß Anspruch 1 sowie durch einen Gegenstand nach Anspruch 13.

Vorteilhafte Ausgestaltungen der Erfindung sind der nachfolgenden Beschreibung sowie den auf den Anspruch 1 rückbezogenen Unteransprüchen zu entnehmen.

Eine erfindungsgemäße landwirtschaftliche Streuvorrichtung zeichnet sich dadurch aus, dass die Streuvorrichtung neben der zum Düngen einer ersten Reihe von Pflanz- oder Saatgut vorgesehenen Abgabeeinheit wenigstens eine zum Düngen einer weiteren Reihe von Pflanz- oder Saatgut vorgesehene weitere Abgabeeinheit aufweist, die eine zumindest teilweise durch den oder einen weiteren Vorratsbehälter verlaufende weitere Rührwelle und eine weitere Dosiervorrichtung mit einem insbesondere als weitere Dosierwelle ausgebildeten und in einem weiteren Dosiergehäuse befindlichen weiteren Dosierelement umfasst, wobei mittels der weiteren Dosiervorrichtung das Gut in Richtung eines weiteren Abgabebereiches der weiteren Abgabeeinheit förderbar ist und wobei eine eine weitere Antriebseinheit aufweisende weitere Antriebsvorrichtung der weiteren Abgabeeinheit zum Antrieb der weiteren Rührwelle und zum Antrieb der weiteren Dosiervorrichtung, vorzugsweise der weiteren Dosierwelle, über die weitere Rührwelle ausgebildet ist.

Pro weiterer Abgabeeinheit wird somit jeweils eine weitere Rührwelle, ein weiteres Dosierelement und eine weitere Antriebseinheit vorgesehen, so dass eine jeweils für eine Reihe zu düngenden Pflanz- oder Saatgut vorgesehene Abgabeeinheit separat gewartet und einfach ein- oder ausgeschaltet werden kann. Der aufwendige Ausbau der kompletten Rührwelle bzw. der kompletten Vorgelegewelle bei einem Austausch lediglich einer Abgabeeinheit für eine Reihe von Pflanz- oder Saatgut entfällt.

Der oder die Abgabebereiche einer Abgabeeinheit werden beispielsweise durch eine oder mehrere Abgabeöffnungen des Dosiergehäuses ausgebildet.

Es versteht sich, dass das in dem Vorratsbehälter bzw. den Vorratsbehältern vorhandene Gut, insbesondere in Form von granularem Dünger, auf die erste und die weitere bzw. die weiteren Abgabeeinheiten aufgeteilt wird. Zwar ist der konstruktive Aufwand für die Vorsehung weiterer Abgabeeinheiten, deren Dosiergehäusen, Dosierelementen bzw. Dosierwellen und den zugehörigen Rührwellen größer, allerdings können die entsprechenden Antriebe dann auch kleiner bauen. Gleiches gilt für die verwendeten Wellendurchmesser. Dies führt teilweise zu geringeren Kosten und zumindest dann zu geringeren Verbräuchen, wenn nur ein Teil der mehreren Abgabeeinheiten verwendet wird. Die erfindungsgemäße Streuvorrichtung ist in Ihrer Minimalkonfiguration für zweireihige Legemaschinen verwendbar, kann jedoch mit entsprechend mehr Abgabeeinheiten dann auch bei drei-, vier- und noch größeren Legemaschinen, insbesondere für Hackfrüchte, eingesetzt werden. Eine solche Legemaschine besitzt dann eine erfindungsgemäße Streuvorrichtung mit einer entsprechenden Menge von Abgabeeinheiten umfassend jeweils zumindest eine von einer Antriebsvorrichtung angetriebene Rührwelle und eine über diese angetriebene Dosiervorrichtung.

Für die Anordnung mehrerer Rührwellen in einem Vorratsbehälter kann dieser in einem unteren Teil in mehrere in Fahrtrichtung betrachtet nebeneinander befindliche Teilbereiche aufgeteilt werden, in denen jeweils die ebenfalls zumindest im Wesentlichen quer zur Fahrtrichtung verlaufenden Rührwellen angeordnet sind. Als Fahrtrichtung wird die typischerweise im Betrieb einer Legemaschine verwendete Fahrtrichtung angenommen.

Erfindungsgemäß sind die Rührwellen jeweils als Vorgelegewelle der Dosierwelle einer zugehörigen Abgabeeinheit ausgebildet. Bei Abschalten einer der Abgabeeinheiten wird nicht nur das Dosierelement abgeschaltet, sondern auch der zugehörige, in dem bzw. durch den zugehörigen Vorratsbehälterteil verlaufende weitere Teil der Abgabeeinheit in Form der Rührwelle stillgelegt. Ein unnötiges Bearbeiten und Durchmischen bzw. Bewegen des abzugebenden Gutes entfällt hiermit. Durch die im Vergleich zum Stand der Technik kürzer bauenden Vorgelegewellen können diese anders dimensioniert werden. Gleiches gilt für die vorzugsweise als Welle mit einer Wendel bzw. als Schneckenwelle ausgebildeten Dosierwellen. Diese verlaufen nicht durch den Vorratsbehälter, sondern befinden sich insbesondere unterhalb des Vorratsbehälters bzw. des jeweiligen Teils des Vorratsbehälters und somit vorzugsweise auch unterhalb der Rührwelle.

Weiterhin erfindungsgemäß sind die Dosierwelle und die Rührwelle dergestalt ausgebildet, dass während des Betriebs die Kraftflüsse durch die Dosierwelle und die Rührwelle einer jeweiligen Abgabeeinheit entgegengesetzt ausgerichtet sind. Insbesondere verlaufen die Dosierwelle und die Rührwelle somit parallel zueinander, wobei der Antrieb der Rührwelle auf der einen Seite und der Abtrieb der Rührwelle auf deren entgegengesetzter Seite erfolgt. Damit die Übersetzungsstufe nicht im Vorratsbehälter erfolgt und Teile derselben durch den Vorratsbehälter durchlaufen, befinden sich die Ender einer jeweiligen Rührwelle insbesondere außerhalb des Vorratsbehälters. Die Rührwelle ist insbesondere entweder in der Vorratsbehälterwand oder direkt neben dieser gelagert.

Der Vorratsbehälter weist eine der Anzahl der Abgabeeinheiten entsprechende Anzahl von Teilbereichen auf, die jeweils von einer Rührwelle durchsetzt sind. Alternativ kann es auch eine entsprechende Anzahl von Vorratsbehältern geben oder bei mehreren Vorratsbehältern ist einem Vorratsbehälter eine Mehrzahl von Abgabeeinheiten zugeordnet.

Durch die Anordnung des Antriebs einer jeweiligen Rührwelle einer ersten Abgabeeinheit und der weiteren Abgabeeinheit(en) an einem Ende der Rührwelle außerhalb des Vorratsbehälters und des Abtriebs in Form der Übersetzungsstufe am anderen Ende der Rührwelle ebenfalls außerhalb des Vorratsbehälters ergibt sich eine Bauraumoptimierung. Ein im Stand der Technik zum Vorratsbehälter gehörender Bereich zwischen zwei Abgabeöffnungen des Vorratsbehälters, in dem oftmals Dünger liegen bleibt, wird vom Vorratsbehälter getrennt und dient als Bauraum für funktionale Elemente der Abgabeeinheiten, die unterhalb des Vorratsbehälters und zwischen den jeweiligen Teilbereichen des Vorratsbehälters angeordnet werden, verwendet. Die Teilbereiche des Vorratsbehälters sind somit in Summe und in Längsrichtung betrachtet schmaler als der obere Bereich des Vorratsbehälters. Bei der Verwendung eines Vorratsbehälters pro Abgabeeinheit gilt dies analog für die Summe der Gesamtbreiten der jeweiligen Vorratsbehälter.

Vorzugsweise weist der Vorratsbehälter zumindest in seiner unteren Hälfte voneinander getrennte Teilbereiche auf, durch die jeweils eine Rührwelle unterschiedlicher Abgabeeinheiten läuft.

Insbesondere ist es möglich, in einem Zwischenraum zwischen entweder zwei voneinander getrennten Teilbereichen des Vorratsbehälters oder zwischen zwei Vorratsbehältern der Streuvorrichtung zumindest einen Teil der Übersetzungsstufe einer der Abgabeeinheiten anzuordnen. In diesem Bereich können auch weitere funktionale Komponenten angeordnet sein. Die nachteilige Behältervolumenverringerung kann durch einen höheren Behälterrand wettgemacht werden.

Entsprechend ist es vorteilhaft, wenn in einem Zwischenraum zwischen entweder zwei voneinander getrennten Teilbereichen des Vorratsbehälters oder zwischen zwei Vorratsbehältern zumindest eine der Antriebseinheiten angeordnet ist.

Vorzugsweise ist eine unterhalb der jeweiligen Rührwelle einer Abgabeeinheit befindliche Austrittsöffnung aus dem Vorratsbehälter mit einem Schieber manuell verschließbar, um während einer Außerbetriebsfahrt der Streuvorrichtung den Vorratsbehälter zu verschließen. An Stelle eines manuell zu betätigenden Schiebers kann dieser auch über einen entsprechenden Aktor betrieben werden, wobei jede Abgabeeinheit vorzugsweise zumindest einen Schieber zum Verschließen der zumindest einen Abgabeöffnung des zugehörigen Teils des jeweiligen Vorratsbehälters vorhanden sein kann. Insbesondere verschließt der Schieber auch eine im Rahmen der Abgabeeinheit vorhandene Ausnehmung, die mit einer Zuführöffnung des Dosiergehäuses fluchtet.

Die Antriebseinheit einer Antriebsvorrichtung einer jeweiligen Abgabeeinheit ist vorzugsweise durch einen Hydraulik- oder Elektromotor ausgebildet, der sich gut in eine entsprechende Streuvorrichtung integrieren lässt und vergleichsweise wenig Bauraum benötigt.

Insbesondere erfolgt über die zwischen Vorgelegewelle und Dosierwelle ausgebildete Übersetzungsstufe in Form von miteinander kämmenden Zahnrädern eine Drehzahlreduktion, d.h. eine Übersetzung ins Langsame und damit einhergehend eine Drehmomentvergrößerung, was für den Antrieb des Dosierelements insbesondere in Form einer Schneckenwelle vorteilhaft ist.

Insbesondere ist eine erfindungsgemäße Streuvorrichtung mit einer Rührwelle versehen, die abtriebsseitig über eine mit wechselbaren Zahnrädern versehene Übersetzungsstufe mit der Dosiervorrichtung verbunden ist. Durch die im Vergleich zum Stand der Technik kürzeren Dosierwellen bzw. Rührwellen bei mehreren Abgabeeinheiten ist es leicht möglich, die jeweiligen Zahnräder zu wechseln, ohne dass die Rührwelle bzw. Vorgelegewelle komplett ausgebaut werden muss.

Vorzugsweise ist das insbesondere unterhalb der Rührwelle einer jeweiligen Abgabeeinheit angeordnete zugehörige Dosierelement durch einen beweglichen und insbesondere abnehmbaren Gehäuseteil des Dosiergehäuses der jeweiligen Abgabeeinheit gelagert, so das durch Öffnen des Gehäuses das Dosierelement, insbesondere in Form einer Schneckenwelle, auf einfache Weise wartungszugänglich ist und beispielsweise ein auf der Dosierwelle befindliches Zahnrad leicht getauscht werden kann. Die Dosierelemente einer ersten und der oder den weiteren Abgabeeinheiten sind insbesondere jeweils einzeln entnehmbar und entsprechend austauschbar.

Weiterhin wird die Wartung der erfindungsgemäßen Streuvorrichtung verbessert, wenn eine Auffangvorrichtung zur Aufnahme der nach einem Öffnen des Gehäuseteils herunterrutschenden Dosierwelle vorgesehen ist. Insbesondere ist jede Abgabeeinheit mit einer solchen Auffangvorrichtung versehen. Diese kann beispielsweise in Form von jeweils am Gehäuse oder am zugehörigen Rahmen der Abgabeeinheit angeordnete hakenförmige Aufnahmen aufweisen, die unterhalb der Dosierwelle befestigt sind und die ein Herunterfallen der Dosierwelle mit ihren hakenförmigen Enden, aus dem dann die Dosierwelle herausgezogen werden kann, verhindern. Solche Haken sind insbesondere in Fahrtrichtung betrachtet links und rechts des Gehäuses angeordnet.

Jeder Abgabeeinheit ist insbesondere jeweils ein Motor zugeordnet, der beispielsweise in Form eines Hydraulikmotors direkt an der Rührwelle sitzt und dessen Ausgangswelle koaxial zur Rührwelle verläuft.

Gemäß einem weiteren Ausführungsbeispiel der Erfindung ist das Dosiergehäuse einer jeweiligen Abgabeeinheit an einem zwei Lagerbleche aufweisenden Rahmen angeordnet, in denen die Rührwelle zumindest teilweise gelagert ist. Als eine zumindest teilweise Lagerung wird eine Lagerung verstanden, die entweder komplett außerhalb des Vorratsbehälters erfolgt oder noch ein zusätzliches Lagerblech oder eine Schale auf einer Innenseite des Vorratsbehälters aufweist, die mit einer Vorratsbehälterwand und/oder dem Lagerblech fest verbunden ist. Der Rahmen kann entweder am Vorratsbehälter angeordnet und/oder an dem Maschinenrahmen befestigt sein. Die in einer jeweiligen Abgabeeinheit wirkenden Kräfte werden kompakt aufgefangen und beeinflussen nicht oder nur in einem geringen Maße weitere Teile der Streuvorrichtung. Rührwelle und insbesondere auch die in einem Gehäuse, welches an dem Rahmen befestigt ist, gelagerte Dosierwelle können hierüber gut gegeneinander abgestützt werden, was insbesondere für eine Übersetzungsstufe vorteilhaft ist.

Vorteilhafterweise ist in dem Rahmen eine Ausnehmung angeordnet, die mit einer Zuführöffnung des Dosiergehäuses und einer Abgabeöffnung des Vorratsbehälters fluchtet, so dass sich der Rahmen entlang des Gehäuses von links nach rechts erstreckt. Das Gehäuse kann somit nicht nur endseitig sondern auch zwischen seinem in Fahrtrichtung betrachtet linken und rechten Ende am Rahmen befestigt werden, was der Stabilität der Abgabeeinheit zugutekommt.

Die Dosierwelle ist insbesondere mit einer links und einer rechts verlaufenden Wendel ausgestattet, so dass von einer zentralen Aufnahme her das zu verteilende Gut nach links und rechts zum jeweiligen Wellenende hin transportiert wird und ausgehend von einem zentralen Einlauf zwei Abgabebereiche bestückt werden können. Jede Abgabeeinheit kann somit zwei Reihen von Streugut ablegen.

Die eingangs gestellte Aufgabe wird ebenfalls durch eine Legemaschine für Hackfrüchte gelöst, die eine vor- oder nachbeschriebene Streuvorrichtung aufweist und der die hierfür beschriebenen Vorteile zukommen.

Weitere Vorteile und Einzelheiten der Erfindung sind der nachfolgenden Figurenbeschreibung zu entnehmen. Schematisch dargestellt zeigt:
- Fig. 1: eine Perspektivdarstellung einer erfindungsgemäßen Vorrichtung,
- Fig. 2: einen Teil des Gegenstands nach Fig. 1,
- Fig. 3: eine geschnittene Darstellung eines Teils des Gegenstands nach Fig. 2,
- Fig. 4: einen Teil des Gegenstands nach Fig. 1.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll sind funktional gleichwirkende Teile mit identischen Bezugsziffern versehen.

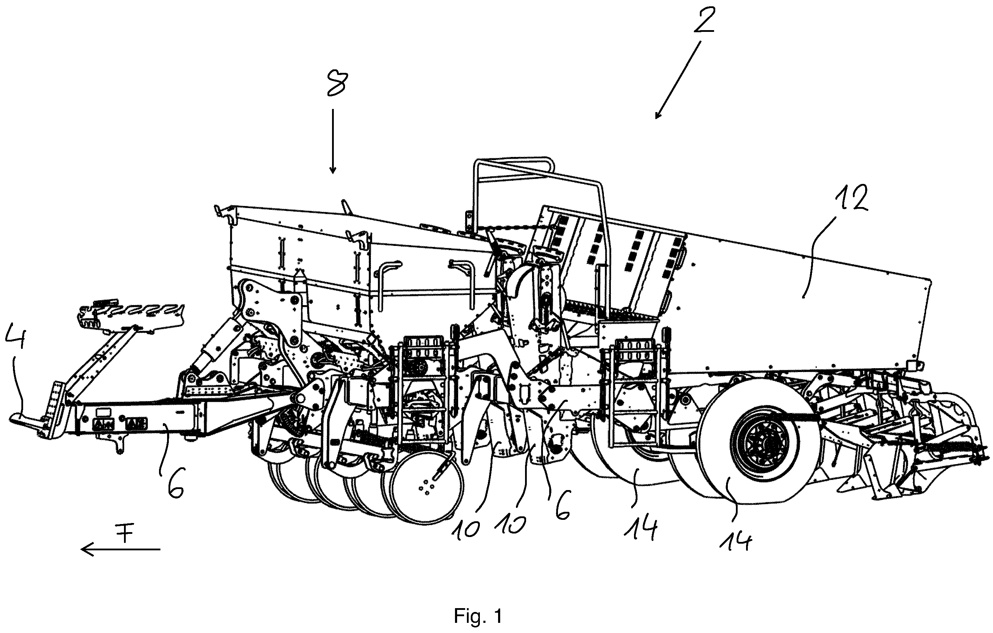

Eine ausführungsbeispielhafte Legemaschine ist gemäß Fig. 1 als gezogene Legemaschine 2 dargestellt. Die Legemaschine 2 kann mittels eines Kupplungsmittels 4 von einem Schlepper in Fahrtrichtung F gezogen werden. Das Kupplungsmittel 4 ist an einem Maschinenrahmen 6 befestigt, an dem eine erfindungsgemäße Streuvorrichtung 8 angeordnet ist. In Fahrtrichtung betrachtet hinter der Streuvorrichtung befindet sich eine Anzahl von Legevorrichtungen 10 für das aus einem Bunker 12 zu legende Saatgut in Form von Kartoffelknollen. Abgestützt wird die Legemaschine 2 mittels eines Räder 14 aufweisenden Fahrwerks.

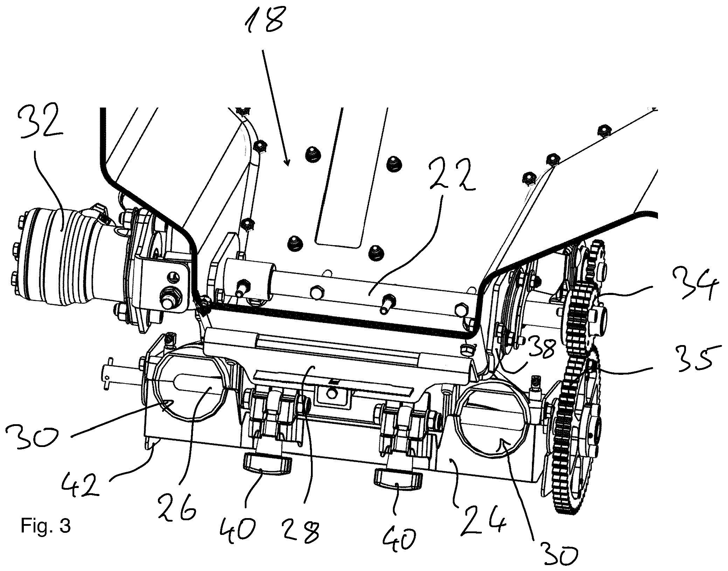

Die ausführungsbeispielhafte Streuvorrichtung 8 umfasst einen Vorratsbehälter 16, der nach unten hin in zwei Teilbereiche 18 übergeht, durch die eine Aufteilung des im Vorratsbehälter 16 vorhandenen Gutes erfolgt. Jedem dieser Teilbereiche 18 ist eine Abgabeeinheit 20 zugeordnet, die eine zumindest teilweise durch den Vorratsbehälter 16 verlaufende Rührwelle 22 (vergl. Fig. 3) und eine Dosiervorrichtung mit einem in Form einer Dosierwelle 26 in einem Dosiergehäuse 24 befindlichen bzw. dort gelagerten Dosierelement umfasst. Ausgehend von dem Teilbereich 18 des Vorratsbehälters 16 gelangt das von der Rührwelle 22 gerührte Gut über eine mittels eines Schiebers 28 verschließbare Ausnehmung in das Dosiergehäuse 24. Ausgehend von diesem zentralen Einlauf wird das Gut mittels der mit einer linkslaufenden und einer rechtslaufenden Wendel versehenen Schneckenwelle bzw. Dosierwelle 26 hin zu den beiden durch Abgabeöffnungen 30 ausgebildeten Abgabebereichen transportiert. Von dort kann es über entsprechende Leitorgane hin zur Ablageposition auf dem nicht weiter dargestellten Boden geführt werden.

Antriebsseitig ist die Rührwelle mit einer Antriebseinheit 32 in Form eines Hydraulikmotors versehen, die koaxial mit der Rührwelle 22 angeordnet ist. Anderenends weist die Rührwelle 22 ein abnehmbares Zahnrad 34 auf, welches mit einem weiteren Zahnrad 35, welches auf der Dosierwelle 26 angeordnet ist, kämmt und entsprechend eine Übersetzungsstufe ausbildet. Wie das Zahnrad 34 ist auch das Zahnrad 35 entnehmbar, so dass die Übersetzungsstufe angepasst werden kann.

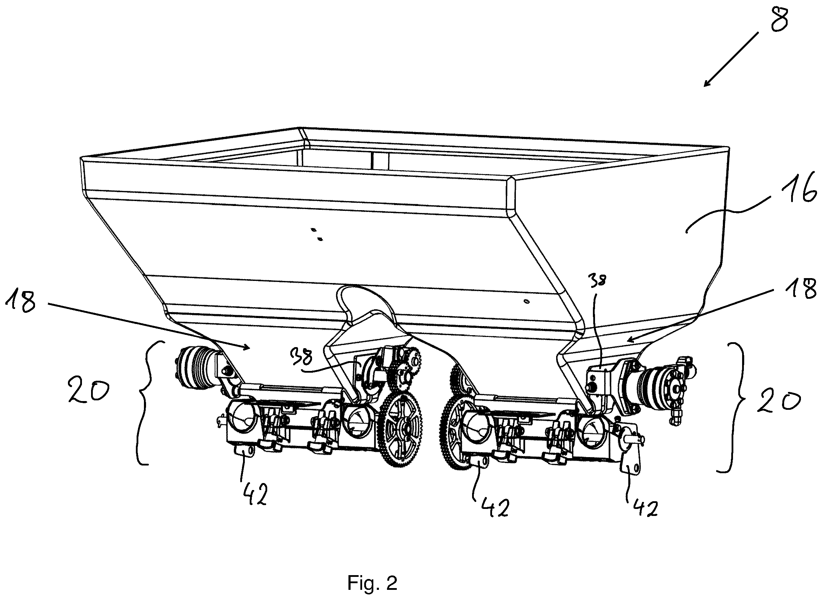

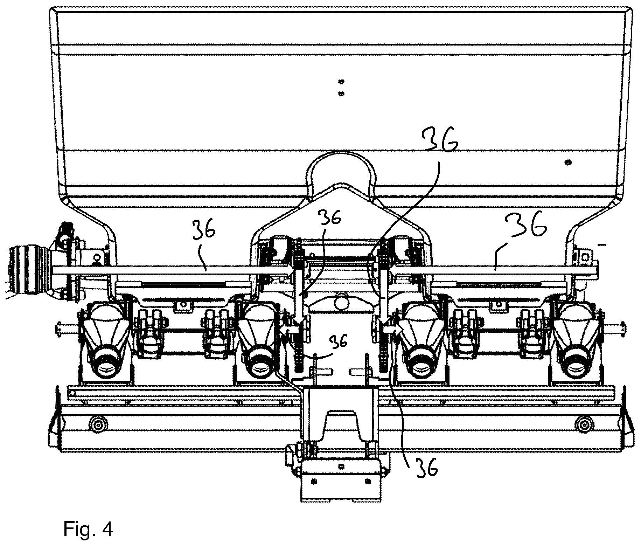

Der zwischen den beiden Teilbereichen des Vorratsbehälters ausgebildete Zwischenraum wird dazu genutzt, die Übersetzungsstufen dort anzuordnen. Diese bauen kurz in Richtung der Drehachsen der Wellen, während die Antriebseinheiten etwas größer aufbauen und daher vorzugsweise in den Außenbereichen zu den Seiten des Vorratsbehälters 16 angeordnet sind (vergl. Fig. 2). Entsprechend ergeben sich die durch Pfeile 36 in der Fig. 4 gekennzeichneten Kraftflüsse.

Jede Abgabeeinheit 20 weist weiterhin einen Rahmen mit Lagerblechen 38 auf, in dem die jeweilige Rührwelle 22 gelagert ist und an dem das Gehäuse 24 einer jeweiligen Dosiervorrichtung befestigt ist. Durch die Lagerung des Dosierelements bzw. der Dosierwelle 26 in dem Dosiergehäuse sind dann Rührwelle und Dosierwelle 22 bzw. 26 unmittelbar gegeneinander abgestützt.

Mittels zweier Verschlussvorrichtungen 40, die die Gehäusehälften des Dosiergehäuses 24 gegeneinanderhalten, kann das Dosiergehäuse 24 geöffnet werden, so dass die Dosierwelle 26 entnehmbar wird. Entsprechend öffnet sich das durch Wandbereiche des Dosiergehäuses 24 ausgebildete jeweilige Lager einer jeweiligen Dosierwelle 26. Auffangvorrichtungen 42 in Form von hakenförmigen Elementen, in die die Dosierwelle 26 hineinrutscht, halten die Dosierwelle 26 nach dem Öffnen des Dosiergehäuses 24 und erleichtern das Aufnehmen der Dosierwelle 26.

## Patentansprüche

1. Landwirtschaftliche Streuvorrichtung für Dünger oder anderes auf einen zu bearbeitenden Boden zu überführendes Gut, umfassend einen Vorratsbehälter (16) für das Gut sowie eine Abgabeeinheit (20), die eine zumindest teilweise durch den Vorratsbehälter (16) verlaufende Rührwelle (22) und eine Dosiervorrichtung mit wenigstens einem insbesondere in einem Dosiergehäuse (24) befindlichen und vorzugsweise als Dosierwelle (26) ausgebildeten Dosierelement umfasst,
wobei mittels der Dosiervorrichtung das Gut in Richtung eines Abgabebereiches der Abgabeeinheit (20) förderbar ist, und wobei eine eine Antriebeinheit (32) aufweisende Antriebsvorrichtung der Abgabeeinheit (20) zum Antrieb der Rührwelle (22) und zum Antrieb der Dosiervorrichtung, vorzugsweise des Dosierelements, ausgebildet ist, wobei die Streuvorrichtung neben der zum Düngen einer ersten Reihe von Pflanz- oder Saatgut vorgesehenen Abgabeeinheit (20) wenigstens eine zum Düngen einer weiteren Reihe von Pflanz- oder Saatgut vorgesehene weitere Abgabeeinheit (20) aufweist, die eine zumindest teilweise durch den oder einen weiteren Vorratsbehälter (16) verlaufende weitere Rührwelle (22) und eine weitere Dosiervorrichtung mit einem insbesondere als weitere Dosierwelle (26) ausgebildeten und in einem weiteren Dosiergehäuse (24) befindlichen, weiteren Dosierelement umfasst, wobei mittels der weiteren Dosiervorrichtung das Gut in Richtung eines weiteren Abgabebereiches der weiteren Abgabeeinheit (20) förderbar ist und wobei eine eine weitere Antriebeinheit (32) aufweisende weitere Antriebsvorrichtung der weiteren Abgabeeinheit (20) zum Antrieb der weiteren Rührwelle (22) und zum Antrieb der weiteren Dosiervorrichtung, vorzugsweise der weiteren Dosierwelle (26), ausgebildet ist, **dadurch gekennzeichnet, dass** der Antrieb der Dosiervorrichtung über die Rührwelle sowie der Antrieb der weiteren Dosiervorrichtung über die weitere Rührwelle erfolgt, wobei die Rührwellen (22) jeweils als Vorgelegewelle der Dosierwelle (26) einer zugehörigen Abgabeeinheit (20) ausgebildet sind und während des Betriebs die Kraftflüsse (36) durch die Dosierwelle (26) und die Rührwelle (22) einer jeweiligen Abgabeeinheit (20) entgegengesetzt ausgerichtet sind.

2. Streuvorrichtung nach Anspruch 1, **dadurch gekennzeichnet, dass** die Rührwelle (22) abtriebsseitig über eine insbesondere mit wechselbaren Zahnrädern (34,35) versehene Übersetzungsstufe mit der Dosiervorrichtung verbunden ist.

3. Streuvorrichtung nach einem der vorherigen Ansprüche, **dadurch gekennzeichnet, dass** das insbesondere unterhalb der Rührwelle (22) einer jeweiligen Abgabeeinheit (20) angeordnete zugehörige Dosierelement durch einen beweglichen und insbesondere abnehmbaren Gehäuseteil des Dosiergehäuses (24) der jeweiligen Abgabeeinheit (20) gelagert ist.

4. Streuvorrichtung nach Anspruch 3, **gekennzeichnet durch** eine Auffangvorrichtung (40), die zur Aufnahme der nach einem Öffnen des Gehäuseteils herunterrutschenden Dosierwelle (26) ausgebildet ist.

5. Streuvorrichtung nach einem der vorherigen Ansprüche, **dadurch gekennzeichnet, dass** den Abgabeeinheiten (20) jeweils ein Motor zugeordnet ist.

6. Streuvorrichtung nach einem der vorherigen Ansprüche, **dadurch gekennzeichnet, dass** der Vorratsbehälter (16) zumindest in seiner unteren Hälfte voneinander getrennte Teilbereiche (18) aufweist, durch die jeweils eine Rührwelle (22) unterschiedlicher Abgabeeinheiten (20) läuft.

7. Streuvorrichtung nach Anspruch 6 und unter Einschluss von Anspruch 4, **dadurch gekennzeichnet, dass** in einem Zwischenraum zwischen den zwei voneinander getrennten Teilbereichen (18) des Vorratsbehälters (16) zumindest ein Teil der Übersetzungsstufe einer der Abgabeeinheiten (20) angeordnet ist.

8. Streuvorrichtung nach einem der vorherigen Ansprüche 1 bis 6 und unter Einschluss von Anspruch 4, **dadurch gekennzeichnet, dass** in einem Zwischenraum zwischen den zwei Vorratsbehältern (16) zumindest ein Teil der Übersetzungsstufe einer der Abgabeeinheiten (20) angeordnet ist.

9. Streuvorrichtung nach einem der vorherigen Ansprüche 1 bis 8 und unter Einschluss von Anspruch 6, **dadurch gekennzeichnet, dass** in einem Zwischenraum zwischen den zwei voneinander getrennten Teilbereichen (18) des Vorratsbehälters (16) zumindest eine der Antriebseinheiten (32) angeordnet ist.

10. Streuvorrichtung nach einem der vorherigen Ansprüche 1 bis 8, **dadurch gekennzeichnet, dass** in einem Zwischenraum zwischen den zwei Vorratsbehältern (16) zumindest eine der Antriebseinheiten (32) angeordnet ist.

11. Streuvorrichtung nach einem der vorherigen Ansprüche, **dadurch gekennzeichnet, dass** das Dosiergehäuse (24) einer jeweiligen Abgabeeinheit (20) an einem zwei Lagerbleche (38) aufweisenden Rahmen angeordnet ist, in denen die Rührwelle (22) zumindest teilweise gelagert ist.

12. Streuvorrichtung nach Anspruch 11, **dadurch gekennzeichnet, dass** in dem Rahmen eine Ausnehmung angeordnet ist, die mit einer Zufuhröffnung des Dosiergehäuses (24) und einer Abgabeöffnung des Vorratsbehälters (16) fluchtet.

13. Legemaschine für Hackfrüchte umfassend eine Streuvorrichtung nach einem der vorherigen Ansprüche.

## Claims

1. An agricultural spreading device for fertilizer or other material to be transferred to a soil to be treated, comprising a storage container (16) for the material and a discharge unit (20) which comprises an agitator shaft (22) extending at least partially through the storage container (16) and a metering device with at least one metering element in particular located in a metering housing (24) and preferably designed as a metering shaft (26),
wherein the material can be conveyed via the metering device towards a discharge area of the discharge unit (20), and wherein a drive device of the discharge unit (20) comprising a drive unit (32) is designed to drive the agitator shaft (22) and to drive the metering device, preferably the metering element, wherein the spreading device, in addition to the discharge unit (20) intended for fertilizing a first row of planting material or seeding material, has at least one further discharge unit (20) which is intended for fertilizing a further row of planting material or seeding material, and which further discharge unit (20) comprises a further agitator shaft (22) extending at least partially through the or a further storage container (16) and a further metering device with a further metering element, in particular designed as a further metering shaft (26) and located in a further metering housing (24), wherein the material can be conveyed via the further metering device towards a further discharge area of the further discharge unit (20), and wherein further a drive device of the further discharge unit (20) comprising a further drive unit (32) is designed to drive the further agitator shaft (22) and to drive the further metering device, preferably the further metering shaft (26), **characterized in that** the metering device is driven via the agitator shaft and the further metering device is driven via the further agitator shaft, wherein the agitator shafts (22) are each designed as a countershaft of the metering shaft (26) of an associated discharge unit (20), and during operation, the power flows (36) through the metering shaft (26) and the agitator shaft (22) of a respective discharge unit (20) are oriented in opposite directions.

2. The spreading device according to claim 1, **characterized in that** the agitator shaft (22) is connected to the metering device on the output side via a transmission stage, in particular provided with interchangeable gear wheels (34, 35).

3. The spreading device according to one of the preceding claims, **characterized in that** the associated metering element arranged in particular below the agitator shaft (22) of a respective discharge unit (20) is mounted by a movable and in particular removable housing part of the metering housing (24) of the respective discharge unit (20).

4. The spreading device according to claim 3, **characterized by** a collecting device (40) which is designed to receive the metering shaft (26) which slides down after opening of the housing part.

5. The spreading device according to one of the preceding claims, **characterized in that** a motor is assigned to each of the discharge units (20).

6. The spreading device according to one of the preceding claims, **characterized in that** the storage container (16) has, at least in its lower half, mutually separated sub-areas (18) through each of which an agitator shaft (22) of different discharge units (20) extends.

7. The spreading device according to claim 6 and including claim 4, **characterized in that** at least a part of the transmission stage of one of the discharge units (20) is arranged in an intermediate space between the two mutually separated sub-areas (18) of the storage container (16).

8. The spreading device according to one of the preceding claims 1 to 6 and including claim 4, **characterized in that** at least a part of the transmission stage of one of the discharge units (20) is arranged in an intermediate space between the two storage containers (16).

9. The spreading device according to one of the preceding claims 1 to 8 and including claim 6, **characterized in that** at least one of the drive units (32) is arranged in an intermediate space between the two mutually separated sub-areas (18) of the storage container (16).

10. The spreading device according to one of the preceding claims 1 to 8, **characterized in that** at least one of the drive units (32) is arranged in an intermediate space between the two storage containers (16).

11. The spreading device according to one of the preceding claims, **characterized in that** the metering housing (24) of a respective discharge unit (20) is arranged on a frame having two bearing plates (38), in which the agitator shaft (22) is at least partially mounted.

12. The spreading device according to claim 11, **characterized in that** a recess is arranged in the frame which recess is aligned with a feed opening of the metering housing (24) and a discharge opening of the storage container (16).

13. A planting machine for root crops comprising a spreading device according to one of the preceding claims.

## Revendications

1. Dispositif d'épandage agricole pour engrais ou autre produit à transférer à un sol à travailler, comprenant un réservoir (16) pour le produit ainsi qu'une unité de distribution (20), qui comprend un arbre d'agitation (22) s'étendant au moins partiellement à travers le réservoir (16) et un dispositif de dosage présentant au moins un élément de dosage se trouvant en particulier dans un boîtier de dosage (24) et de préférence réalisé sous forme d'arbre de dosage (26), le dispositif de dosage permettant de transporter le produit en direction d'une zone de distribution de l'unité de distribution (20) et un dispositif d'entraînement, présentant une unité d'entraînement (32), de l'unité de distribution (20) étant réalisé pour l'entraînement de l'arbre d'agitation (22) et pour l'entraînement du dispositif de dosage, de préférence de l'élément de dosage, le dispositif d'épandage présentant, à côté de l'unité de distribution (20) destinée à la fertilisation d'une première série de plants ou de semences, au moins une autre unité de distribution (20) destinée à la fertilisation d'une autre série de plants ou de semences, qui comprend un autre arbre d'agitation (22) s'étendant au moins partiellement à travers ledit ou un autre réservoir (16) et un autre dispositif de dosage présentant un autre élément de dosage en particulier réalisé sous forme d'autre arbre de dosage (26) et se trouvant dans un autre boîtier de dosage (24, l'autre dispositif de dosage permettant de transporter le produit en direction d'une autre zone de distribution de l'autre unité de distribution (20) et un autre dispositif d'entraînement, présentant une autre unité d'entraînement (32), de l'autre unité de distribution (20) étant réalisé pour l'entraînement de l'autre arbre d'agitation (22) et pour l'entraînement de l'autre dispositif de dosage, de préférence de l'autre arbre de dosage (26), **caractérisé en ce que** l'entraînement du dispositif de dosage s'effectue par l'intermédiaire de l'arbre d'agitation et l'entraînement de l'autre dispositif de dosage s'effectue par l'intermédiaire de l'autre arbre d'agitation, les arbres d'agitation (22) étant à chaque fois réalisés comme arbre secondaire de l'arbre de dosage (26) d'une unité de distribution (20) associée, et, pendant le fonctionnement, les flux de force (36) à travers l'arbre de dosage (26) et l'arbre d'agitation (22) d'une unité de distribution (20) respective étant orientés à l'opposé l'un de l'autre.

2. Dispositif d'épandage selon la revendication 1, **caractérisé en ce que** l'arbre d'agitation (22) est relié côté sortie au dispositif de dosage par l'intermédiaire d'un étage de transmission en particulier pourvu de roues dentées (34, 35) pouvant être remplacées.

3. Dispositif d'épandage selon l'une des revendications précédentes, **caractérisé en ce que** l'élément de dosage associé, en particulier agencé sous l'arbre d'agitation (22) d'une unité de distribution (20) respective, est logé par une partie de boîtier mobile et en particulier amovible du boîtier de dosage (24) de l'unité de distribution (20) respective.

4. Dispositif d'épandage selon la revendication 3, **caractérisé par** un dispositif de réception (40) qui est réalisé pour recevoir l'arbre de dosage (26) glissant vers le bas après l'ouverture de la partie de boîtier.

5. Dispositif d'épandage selon l'une des revendications précédentes, **caractérisé en ce qu'**un moteur est à chaque fois associé aux unités de distribution (20).

6. Dispositif d'épandage selon l'une des revendications précédentes, **caractérisé en ce que** le réservoir (16) présente des zones partielles (18), séparées les unes des autres au moins dans sa moitié inférieure, à travers lesquelles s'étend à chaque fois un arbre d'agitation (22) d'unités de distribution (20) différentes.

7. Dispositif d'épandage selon la revendication 6 et y compris la revendication 4, **caractérisé en ce qu'**au moins une partie de l'étage de transmission d'une des unités de distribution (20) est agencée dans un espace intermédiaire entre les deux zones partielles (18), séparées les unes des autres, du réservoir (16).

8. Dispositif d'épandage selon l'une des revendications précédentes 1 à 6 et y compris la revendication 4, **caractérisé en ce qu'**au moins une partie de l'étage de transmission d'une des unités de distribution (20) est agencée dans un espace intermédiaire entre les deux réservoirs (16).

9. Dispositif d'épandage selon l'une des revendications précédentes 1 à 8 et y compris la revendication 6, **caractérisé en ce qu'**au moins l'une des unités d'entraînement (32) est agencée dans un espace intermédiaire entre les deux zones partielles (18), séparées les unes des autres, du réservoir (16).

10. Dispositif d'épandage selon l'une des revendications précédentes 1 à 8, **caractérisé en ce qu'**au moins l'une unités d'entraînement (32) est agencée dans un espace intermédiaire entre les deux réservoirs (16).

11. Dispositif d'épandage selon l'une des revendications précédentes, **caractérisé en ce que** le boîtier de dosage (24) d'une unité de distribution (20) respective est agencé au niveau d'un cadre présentant deux tôles de logement (38), dans lequel cadre l'arbre d'agitation (22) est logé au moins partiellement.

12. Dispositif d'épandage selon la revendication 11, **caractérisé en ce qu'**un évidement est agencé dans le cadre, lequel évidement est affleurant avec une ouverture d'alimentation du boîtier de dosage (24) et avec une ouverture de distribution du réservoir (16).

13. Planteuse pour plantes sarclées comprenant un dispositif d'épandage selon l'une des revendications précédentes.
